# EUROPEAN PATENT SPECIFICATION

(11) **EP 2 636 503 B1**
(45) Date of publication and mention of the grant of the patent: **24.04.2019**
(21) Application number: 13158124.1
(22) Date of filing: 07.03.2013
(51) Int. Cl.: B29C 45/72, B29C 45/18

(54) **INJECTION MOLDING MACHINE**
SPRITZGIESSMASCHINE
MACHINE DE MOULAGE À INJECTION

(30) Priority: 08.03.2012 JP 2012051302
(43) Date of publication of application: 11.09.2013
(73) Proprietor: SUMITOMO HEAVY INDUSTRIES, LTD., Tokyo 141-6025 (JP)
(72) Inventor: Abe, Masahiro, Kanagawa, 237-8555 (JP)
(74) Representative: Hoffmann Eitle

(56) References cited:
- JP-A- H0 788 911
- US-A- 5 422 061
- US-A1- 2002 074 678

## Description

### BACKGROUND OF THE INVENTION

### 1. Field of the Invention

The present invention relates to an injection molding machine.

### 2. Description of the Related Art

A injection molding machine includes an injection device that injects molten resin into a mold device. The mold device includes a stationary mold and a movable mold. A cavity is formed between the stationary mold and the movable mold when the mold device is clamped. The injection device melts resin within a cylinder and injects the molten resin into the cavity of the mold device from a nozzle arranged at the tip of the cylinder. After the resin is cooled and solidified within the cavity, the mold device may be opened and a molding product may be removed from the mold device.

The injection device includes a screw that may rotate within the cylinder and move back and forth. A hopper supplies resin pellets (resin material) to one end portion of the screw. When the screw is rotated, the flight of the screw moves to transfer the resin pellets filled in a thread groove of the screw from the hopper side to the nozzle side.

The temperature at the nozzle side of the cylinder is maintained at the resin melting temperature. On the other hand, the temperature at the hopper side of the cylinder is maintained at a lower temperature that would not cause the resin pellets to soften or melt so as to prevent the resin pellets from forming a bridge (agglomerating). The resin pellets soften and melt as 5 they moved from the hopper side towards the nozzle side. (See e.g., Patent Document 1}
Patent Document 1: International Patent Publication WO/2007/105646

Another document is JP H0788911 A which refers to an injection moulding machine. The resin material caught by grooves of a screw is gradually brought to a molten state while sent forwardly within a cylinder. Nitrogen gas is injected from a leading end of an hose to directly cool the root part of the screw and the space around the root part is filled with nitrogen gas to exclude oxygen contained in air from the periphery of the root part.

In a conventional injection device of the injection molding machine, a heater is provided at the nozzle side of the cylinder, and a water cooling cylinder is provided at the hopper side of the cylinder. With such
a configuration, the heat of the heater tends to flow into the water cooling cylinder to thereby cause a waste of energy.

### SUMMARY OF THE INVENTION

It is a general object of at least one embodiment of the present invention to provide an injection molding machine that substantially obviates one or more problems caused by the limitations and disadvantages of the related art- It is one particular
object of at least one embodiment of the present invention is to reduce the amount of energy used in an injection molding machine,

According to one embodiment of the present invention, an injection molding machine is provided, which includes features of independent claim 1.

According to one aspect of the present invention, the amount of energy used in an injection molding machine may be reduced.

### BRIEF DESCRIPTION OF THE DRAWINGS

Other objects, features and advantages of the present invention will become more apparent from the 15 following detailed description when read in conjunction with the accompanying drawings, in which:
FIG. 1 is a schematic view of an injection molding machine according to an embodiment;
FIG. 2 is a diagram showing a relevant portion of the injection molding machine;
FIG. 3 is a diagram showing a cooler according to a first modified embodiment;
FIG. 4 is a diagram showing a cooler according to a second modified embodiment;
FIG. 5 is a diagram showing a cooler according to a third modified embodiment; and
FIG. 6 is a diagram showing a cooler according to a fourth modified embodiment, which is part of the present invention.

### DETAILED DESCRIPTION OF THE PREFERRED EMBODIMENT

In the following, embodiments of the present invention are described with reference to the accompanying drawings. It is noted that identical or corresponding features shown in two or more of the drawings are given the same reference numerals and their descriptions may be omitted. Also, in the following descriptions, it is assumed that the injecting direction of resin by the injection device corresponds to a forward direction, and the direction opposite the injecting direction corresponds to a backward direction.

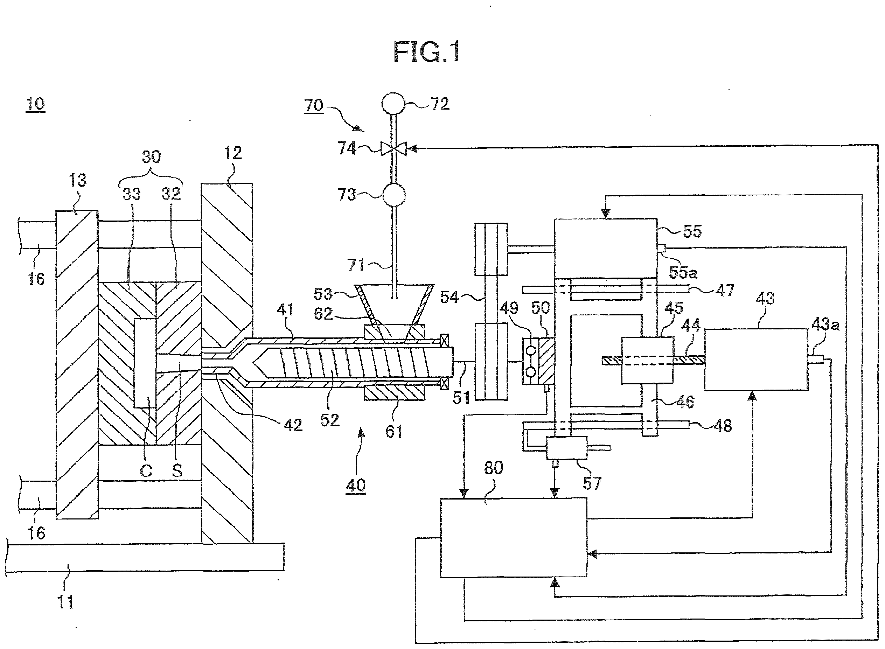

FIG. 1 is a schematic view of an injection molding machine 10 according to an embodiment. FIG. 1 shows the injection molding machine 10 when its mold device 30 is clamped.

The injection molding machine 10 includes a frame 11, a stationary platen 12 that is fixed to the frame 11, and plural (e.g., four) tie-bars 16 that extend from the stationary platen 12. Also, the injection molding machine 10 includes a movable platen 13 that faces the stationary platen 12 and is arranged to be movable along the tie-bars 16 (left and right directions in FIG. 1). Further, a movable mold 33 is attached to the face of the movable platen 13 facing the stationary platen 12, and a stationary mold 32 is attached to the face of the stationary platen 12 facing the movable platen 13. The stationary mold 32 and the movable mold 33 form the mold device 30. By moving the movable platen 13 with respect to the stationary platen 12, the mold device 30 may be closed, clamped, or opened. When the mold device 30 is in a clamped state, a cavity C is formed between the movable mold 33 and the stationary mold 32.

The injection molding machine 10 includes an injection device 40 that melts resin within a cylinder 41 and injects the molten resin from a nozzle 42 to fill the cavity C of the mold device 30 with resin. The injection device 40 includes an injection motor 43. The rotation of the injection motor 43 is transmitted to a ball screw shaft 44. A ball screw nut 45 that moves back and forth in response to the rotation of the ball screw shaft 44 is fixed to a pressure plate 46. The pressure plate 46 is arranged to be movable along guide bars 47 and 48 that are fixed to a base frame (not shown). The back-and-forth motion of the pressure plate 46 is transmitted to a screw 52 via a bearing 49, a load cell 50, and an injection shaft 51. The screw 52 is arranged to be rotatable within the cylinder 41 and movable along the direction of its rotational axis. A hopper 53 is arranged to supply resin pellets (resin material) to the rear end portion of the screw 52. The rotational motion of a plasticizing motor 55 is transmitted to the injection shaft 51 via a linking member 54 such as a belt or a pulley. That is, the injection shaft 51 is driven and rotated by the plasticizing motor 55 to thereby rotate the screw 52.

In a plasticizing process, the plasticizing motor 55 is driven to rotate the screw 52 so that the resin pellets supplied to the rear end portion of the screw 52 may be transferred to the front portion of the screw 52. During this process, the resin pellets are softened and melted. The accumulation of the molten resin at the front portion of the screw 52 causes the screw 52 to move backward. In an injection process, the injection motor 43 is driven to move the screw 52 forward to push the resin and inject the resin into the cavity C from the nozzle 42. The resin is pushed into the cavity C formed between the stationary mold 32 and the movable mold 33 via a sprue S. The force pushing the resin is detected as a reaction force by the load cell 50. That is, the injecting pressure of resin from the nozzle 42 is detected by the load cell 50. The detected injecting pressure is input to a control unit 80. Also, since thermal contraction of resin occurs within the cavity C as a result of the cooling of the resin, resin is supplied to compensate for the thermal contraction of the resin. During this time, a pressure maintaining process is performed to maintain the injecting pressure of resin at a predetermined pressure.

A position detector 57 for detecting the moving distance of the screw 52 is attached to the pressure plate 46. The position detector 57 inputs a detection signal indicating a detected position of the screw 52 to the control unit 80. The detection signal of the position detector 57 may also be used to detect the moving speed of the screw 52.

The injection motor 43 and the plasticizing motor 55 may correspond to servo motors, for example, and encoders 43a and 55a for detecting their corresponding rotational speeds are attached to the injection motor 43 and the plasticizing motor 55, respectively. The rotational speeds detected by the encoders 43a and 55a are input to the control unit 80 as detection signals. The control unit 80 performs feedback control of the injection motor 43 and the plasticizing motor 55 based on the detection signals from the encoders 43a and 55a.

The control unit 80 controls various operations of the injection molding machine 10. The control unit 80 may be realized by a microcomputer, for example, and may include a CPU, a memory, a timer, a counter, an input interface, and an output interface, for example.

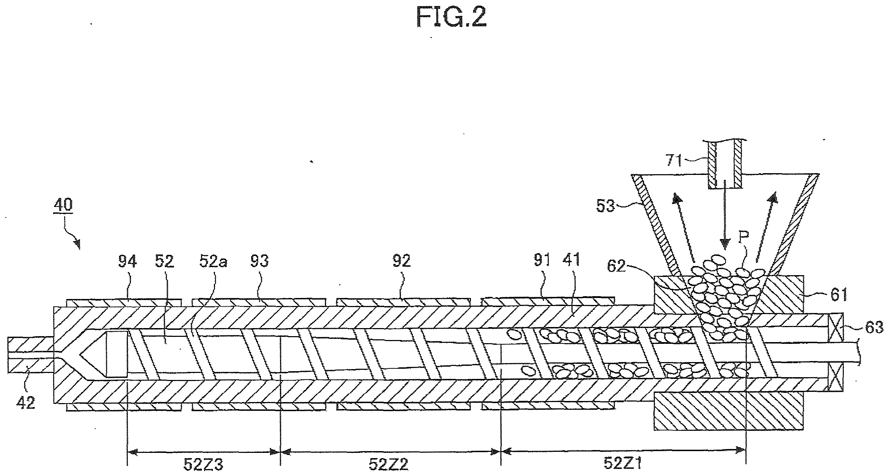

FIG. 2 is a diagram showing a relevant portion of the injection molding machine 10.

The cylinder 41 penetrates through a cylinder holding member 61. The cylinder holding member 61 is arranged to hold the outer periphery of a rear end portion of the cylinder 41. A resin supply port 62 is arranged at the cylinder holding member 61 and the cylinder 41. Resin pellets P supplied to the cylinder 41 from the hopper 53 via the resin supply port 62 are filled in a thread groove of the screw 52. When the screw 52 is rotated, the flight of the screw 52 moves so that the resin pellets P within the thread groove of the screw 52 is moved forward.

Plural heaters 91-94 are arranged at the outer periphery of the cylinder 41 to heat the cylinder 41 to a predetermined temperature. The resin that is moved forward within the cylinder 41 is heated by the heat from the heaters 91-94. The melting of the resin progresses as the resin moves forward so that the resin may be completely melted by the time it reaches the front end portion of the cylinder 41. As the molten resin accumulates at the front portion of the cylinder 41, the screw 52 moves backward. The rotation of the screw 52 is stopped when the screw 52 moves backward by a predetermined distance and a predetermined amount of resin is accumulated at the front portion of the cylinder 41. Then, the screw 52 is moved forward without rotating within the cylinder 41 so that the molten resin is injected into the mold device 30 from the nozzle 42.

The screw 52 is divided into a supply portion (resin supply portion) 52Z1, a compressing portion 52Z2, and a plasticizing portion 52Z3 along the axial direction from the rear side (resin supplying side) to the front side (nozzle side) . The supply portion 52Z1 is where resin is supplied and transferred forward. The compressing portion 52Z2 is where the supplied resin is compressed and melted. The plasticizing portion 52Z3 is where the molten resin is plasticized at predetermined amounts. The depth of the thread groove of the screw 52 is arranged to be deeper at the supply portion 52Z1 and shallower at the plasticizing portion 52Z3. Further, the depth of the thread groove at the compressing portion 52Z2 is arranged to be shallower towards the front side.

The portion of the cylinder 41 at the front side of the cylinder holding member 61 is divided into plural (e.g., four) zones, and the heaters 91-94 are each arranged at their corresponding zones. The electric currents to be supplied to the heaters 91-94 are independently controlled by the control unit 80 so that the cylinder 41 may be heated zone-by-zone. The heaters 91-94 are arranged around the outer periphery of the cylinder 41. It is noted that although not shown, a heater may also be arranged around the outer periphery of the nozzle 42.

The temperature of the cylinder 41 at the nozzle 42 side is maintained at the resin melting temperature. On the other hand, the temperature of the cylinder 41 at the hopper 53 side is maintained at a lower temperature that would not cause the resin to soften or melt to prevent the resin from forming a bridge.

The injection molding machine 10 further includes a cooler 70 for cooling the resin transferred at the supply portion 52Z1 of the screw 52 using a cooling gas. The cooler 70 includes a supply pipe 71 for supplying the cooling gas into the cylinder 41. As shown in FIG. 1, the tip portion of the supply pipe 71 is inserted into the hopper 53 and the base end portion of the supply pipe 71 is connected to a gas cylinder 72 corresponding to a gas supply source. A flow rate adjuster 73 and a supply shut-off valve 74 are arranged between the two end portions of the supply pipe 71. The supply shut-off valve 74 is controlled by the control unit 80 to open and close.

When the supply shut-off valve 74 is open, the cooling gas is discharged from the tip end portion of the supply pipe 71 as shown in FIG. 2. The cooling gas passes through the spaces formed between the resin pellets P that are stored in the hopper 53 and flows into the cylinder 41 via the resin supply port 62. The cooling gas flows in the forward direction through the space between the inner wall of the cylinder 41 and the supply portion 52Z1 of the screw 52. Since the portions of the screw 52 beyond the supply portion 52Z1 are filled with molten resin, the cooling gas reverts back to be discharged outside via the resin supply port 62. That is, the resin supply port 62 acts as the gas flow inlet and gas flow outlet of the cooling gas. It is noted that resin particles stuck around the resin supply port 62 may be blown off by the cooling gas so that accumulation of resin at the supply port 62 may be prevented and alteration of resin due to heat may be reduced.

An inert gas such as nitrogen gas may be used as the cooling gas to prevent oxidation of the resin. Depending on the type of resin used, in certain embodiments, air may be used as the cooling gas. The temperature of the cooling gas discharged from the supply pipe 71 is arranged to be lower than the temperature at the supply portion 52Z1 of the screw 52.

The space between the rear end portion of the cylinder 41 and the screw 52 is sealed by a ring-shaped sealing member 63. This prompts the cooling gas to flow towards the front side of the supply port 62. In this way, resin transferred at the supply portion 52Z1 of the screw 52 may be efficiently cooled.

As can be appreciated, the cooler 70 according to the present embodiment cools the resin being transferred at the supply portion 52Z1 of the screw 52 by having the cooling gas flow within the cylinder 41. Since the cooling gas as the cooling agent comes into contact with the resin, the amount of energy used to cool the resin may be reduced compared to a case where cooling water is used as the cooling agent and the cooling water is arranged to flow through a flow path arranged at the cylinder holding member 61 rather than coming into contact with the resin. By reducing the amount of energy used to cool the resin, the cylinder 41 may be maintained at a higher temperature so that the amount of energy used to heat the cylinder 41 may be reduced as well.

### [First Modified Embodiment]

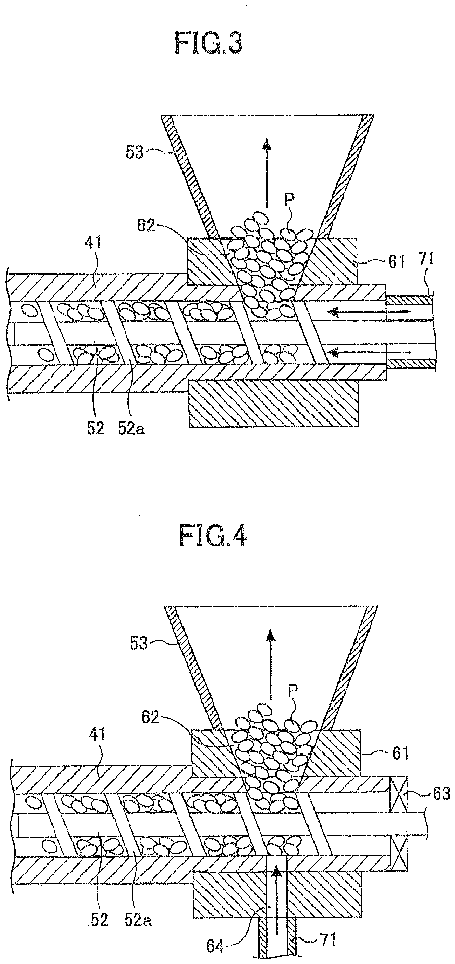

FIG. 3 is a diagram showing a cooler according to a first modified embodiment. In the first modified embodiment, the tip portion of the supply pipe 71 is connected to the rear end portion of the cylinder 41. The cooling gas flows into the cylinder 41 along the axial direction of the cylinder 41 to reach the supply portion 52Z1 of the screw 52 (see FIG. 2). Then, the cooling gas is discharged outside via the resin supply port 62. That is, the resin supply port 62 acts as the gas flow outlet of the cooling gas. In this way, resin particles stuck around the resin supply port 62 may be blown off by the cooling gas so that accumulation of resin at the supply port 62 may be prevented and alteration of resin due to heat may be reduced.

As in the previously described embodiment, in the first modified embodiment, the resin being transferred at the supply portion 52Z1 of the screw 52 is cooled by having the cooling gas flow within the cylinder 41. Since the cooling gas as the cooling agent comes into contact with the resin, the amount of energy used to cool the resin may be reduced. By reducing the amount of energy used to cool the resin, the cylinder 41 may be maintained at a higher temperature so that the amount of energy used to heat the cylinder 41 may be reduced as well.

Further, according to an aspect of the first modified embodiment, by having the cooling gas flow into the cylinder 41 along the axial direction of the cylinder 41, the cooling gas may flow more easily towards the front side of the resin supply port 62 so that the resin being transferred at the supply portion 52Z1 of the screw 52 may be reliably cooled.

### [Second Modified Embodiment]

FIG. 4 is a diagram showing a cooler according to a second modified embodiment. In the second modified embodiment, a cooling gas flow inlet 64 is formed at the cylinder holding member 61 and the cylinder 41. The cooling gas flow inlet 64 is arranged to face the resin supply port 62.

The cooling gas flows through the space between the inner wall of the cylinder 41 and the supply portion 52Z1 of the screw 52 and is discharged outside the cylinder holding member 61 via the resin supply port 62. That is, the resin supply port 62 acts as the cooling gas flow outlet.

As in the previously described embodiments, in the second modified embodiment, the resin being transferred at the supply portion 52Z1 of the screw 52 is cooled by having the cooling gas flow within the cylinder 41. Since the cooling gas as the cooling agent comes into contact with the resin, the amount of energy used to cool the resin may be reduced. By reducing the amount of energy used to cool the resin, the cylinder 41 may be maintained at a higher temperature so that the amount of energy used to heat the cylinder 41 may be reduced as well.

Further, according to an aspect of the second modified embodiment, since the cooling gas flow inlet 64 is arranged to face the resin supply port 62 that acts as the cooling gas flow outlet, the flow of the cooling gas may be rectified so that the resin particles stuck around the resin supply port 62 may be reliably blown off.

### [Third Modified Embodiment]

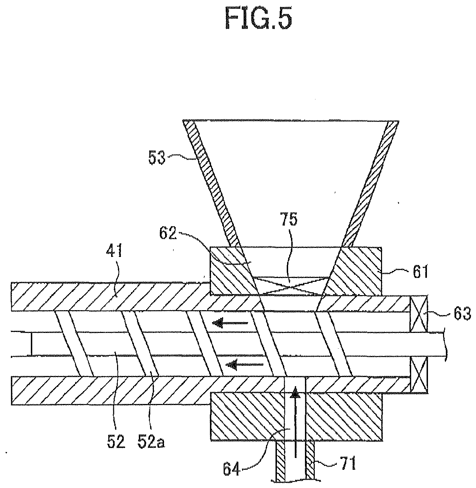

FIG. 5 is a diagram showing a cooler according to a third modified embodiment. FIG. 5 shows a state in which a gas flow outlet shut-off valve 75 is closed. It is noted when the gas flow outlet shut-off valve 75 is open, the cylinder 41 may be in a state similar to that shown in FIG. 4.

In the third modified embodiment, the gas flow outlet shut-off valve 75 is arranged at the resin supply port 62 that acts as the gas flow outlet of the cooling gas. The gas flow outlet shut-off valve 75 is controlled by the control unit 80 to open and close. When the gas flow outlet shut-off valve 75 is open, the cooling gas within the cylinder 41 may flow outside. When the gas flow outlet shut-off valve 75 is closed, the cooling gas within the cylinder 41 is prevented from flowing outside.

The gas flow outlet shut-off valve 75 may be open when the resin pellets P are supplied into the cylinder 41 from the hopper 53. In this case, as in the second modified embodiment shown in FIG. 4, the cooling gas may be discharged outside via the resin supply port 62 corresponding to the gas flow outlet of the cooling gas.

On the other hand, when starting up or shutting down the injection molding machine 10, or replacing the resin, for example, the gas flow outlet shut-off valve 75 may be closed after resin remaining within the cylinder 41 is discharged. In this case, since the resin supply port 62 corresponding to the gas flow outlet is sealed, the cooling gas that flows into the cylinder 41 from the gas flow inlet 64 flows in the forward direction to be discharged outside from the nozzle 42. In this way, the cooling gas may flow throughout the cylinder 41 so that the cylinder 41 may be cooled within a short period of time.

It is noted that in certain embodiments, the gas flow outlet shut-off valve 75 may be closed while the resin remaining within the cylinder 41 is being discharged.

### [Fourth Modified Embodiment] (part of the present invention)

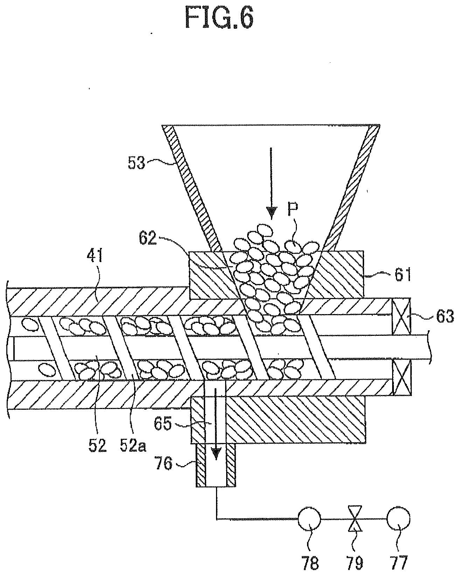

FIG. 6 shows a diagram showing a cooler according to a fourth modified embodiment. In the fourth modified embodiment, an exhaust pipe 76 is used instead of the supply pipe 71. As is shown in FIG. 6, one end portion of the exhaust pipe 76 is connected to a gas flow outlet 65 that is formed at the cylinder holding member 61 and the cylinder 41, and the other end portion of the exhaust pipe 76 is connected to a vacuum pump 77 corresponding to a negative pressure source. Further, a flow rate adjuster 78 and an exhaust shut-off valve 79 are arranged between the two end portions of the exhaust pipe 76. The vacuum pump 77 is controlled by the control unit 80. The exhaust shut-off valve 79 is controlled by the control unit 80 to open and close.

When the vacuum pump 77 is activated and the exhaust shut-off valve 79 is opened, gas within the cylinder 41 is discharged via the exhaust pipe 76. As a consequence, the atmospheric pressure within the cylinder
41 drops to a negative pressure and the outside air is sucked into the cylinder 41. This air is used as the cooling gas in the present embodiment. The cooling gas passes through the spaces between the resin pellets P that are stored in the hopper 53 and flows into the cylinder 41 via the resin supply port 62. After flowing through the space between the inner wall of the cylinder 41 and the supply portion 52Z1 of the screw 52, the cooling gas is sucked through the exhaust pipe 76. In the present embodiment, the resin supply port 62 acts as the cooling gas flow inlet. Since resin particles stuck around the resin supply port 62 may be blown off by the cooling air, accumulation of resin may be prevented and alteration of resin due to heat may be reduced.

As in the previously described embodiments, in the fourth modified embodiment, the resin being transferred at the supply portion 52Z1 of the screw 52 is cooled by having the cooling gas flow within the cylinder 41. Since the cooling gas as the cooling agent comes into contact with the resin, the amount of energy used to cool the resin may be reduced. By reducing the amount of energy used to cool the resin, the cylinder 41 may be maintained at a higher temperature so that the amount of energy used to heat the cylinder 41 may be reduced as well.

Further, according to an aspect of the fourth modified embodiment, by arranging the exhaust pipe 76, the flow of the cooling gas may be directed to a desired direction. For example, by arranging the cooling gas flow outlet 65 to be positioned at the front side of the resin supply port 62 corresponding to the cooling gas flow inlet as shown in FIG. 6, the cooling gas may easily flow towards the front side of the resin supply port 62.

It is noted that in the fourth embodiment, the exhaust pipe 76 is used instead of the supply pipe 71. However, in another embodiment being part of the present invention, both the supply pipe 71 and the exhaust pipe 71 are used.

Further, although the present invention has been described above in connection with certain illustrative embodiments, the present invention is not limited to these embodiments, and numerous variations and modifications may be made without departing from the scope of the present invention as defined in the appended claims.

For example, although a coolant flow path is not formed at the cylinder holding member 61 used in the above embodiments, the cylinder holding member 61 may include such a coolant flow path. That is, as long as the cooling gas is arranged to come into contact with the resin, the amount of energy used to cool and heat the resin may be reduced.

## Claims

1. An injection molding machine (10) that manufactures a molding product by filling molten resin into a mold, the injection molding machine comprising:
a cylinder (41) to which resin is supplied;
a heater (91-94) that heats the cylinder;
a screw (52) that plasticizes the resin within the cylinder (41); and
a cooler (70) that cools the resin that is being transferred at a resin supply portion (52Z1) of the screw (52) using a cooling gas, **characterized in that** the cooler (70) includes an exhaust pipe (76) that discharges the cooling gas outside the cylinder (41).

2. The injection molding machine (10) as claimed in claim 1, wherein
the cooler (70) includes a supply pipe (71) that supplies the cooling gas into the cylinder (41).

3. The injection molding machine (10) as claimed in claim 2, wherein
the cooler (70) includes a shut-off valve (75) that prompts the cooler (70) to switch between allowing the cooling gas to flow outside via an opening formed at the cylinder (41) and preventing the cooling gas from flowing outside.

4. The injection molding machine (10) as claimed in any one of claims 1-3, wherein
the cylinder (41) includes a gas flow inlet (64) and a gas flow outlet (65) of the cooling gas; and
at least one of the gas flow inlet (64) and the gas flow outlet (65) corresponds to a resin supply port (62) for supplying a resin material to the resin supply portion (52Z1) of the screw (52).

5. The injection molding machine (10) as claimed in any one of claims 1-4, wherein
the cooling gas includes an inert gas.

## Patentansprüche

1. Spritzgießmaschine (10), die ein Gießprodukt durch Füllen von geschmolzenem Harz in eine Gussform herstellt, wobei die Spritzgießmaschine umfasst:
einen Zylinder (41), dem Harz zugeführt wird;
eine Heizung (91-94), die den Zylinder heizt;
eine Schraube (52), die das Harz innerhalb des Zylinders (41) plastifiziert; und
einen Kühler (70), der das Harz unter Verwendung eines Kühlgases kühlt, das an einen Harzzuführabschnitt (52Z1) der Schraube (52) übertragen wird, **dadurch gekennzeichnet, dass** der Kühler (70) ein Abgasrohr (76) einschließt, das das Kühlgas außerhalb des Zylinders (41) ausstößt.

2. Spritzgießmaschine (10) nach Anspruch 1, wobei
der Kühler (70) ein Zuführrohr (71) einschließt, das das Kühlgas in den Zylinder (41) zuführt.

3. Spritzgießmaschine (10) nach Anspruch 2, wobei
der Kühler (70) ein Absperrventil (75) einschließt, das den Kühler (70) dazu veranlasst, zwischen einem Ermöglichen, dass das Kühlgas, außerhalb über eine Öffnung, die am Zylinder (41) gebildet ist, strömt und einem Verhindern, dass das Kühlgas außerhalb strömt, zu schalten.

4. Spritzgießmaschine (10) nach einem der Ansprüche 1-3, wobei
der Zylinder (41) einen Gasstromeinlass (64) und einen Gasstromauslass (65) des Kühlgases einschließt; und
mindestens eines des Gasstromeinlasses (64) und des Gasstromauslasses (65) einem Harzzuführanschluss (62) entspricht, um dem Harzzuführabschnitt (52Z1) der Schraube (52) ein Harzmaterial zuzuführen.

5. Spritzgießmaschine (10) nach einem der Ansprüche 1-4, wobei das Kühlgas ein Inertgas einschließt.

## Revendications

1. Machine de moulage à injection (10) qui fabrique un produit de moulage en introduisant de la résine fondue dans un moule, la machine de moulage à injection comprenant :
un cylindre (41) auquel est fourni de la résine ;
un dispositif de chauffage (91-94) qui chauffe le cylindre ;
une vis (52) qui plastifie la résine à l'intérieur du cylindre (41) ; et
un refroidisseur (70) qui refroidit la résine qui est transférée au niveau d'une partie d'alimentation en résine (52Z1) de la vis (52) au moyen d'un gaz de refroidissement, **caractérisée en ce que** le refroidisseur (70) inclut un tuyau d'échappement (76) qui décharge le gaz de refroidissement à l'extérieur du cylindre (41).

2. Machine de moulage à injection (10) selon la revendication 1, dans laquelle
le refroidisseur (70) inclut une tuyauterie d'alimentation (71) qui fournit le gaz de refroidissement dans le cylindre (41).

3. Machine de moulage à injection (10) selon la revendication 2, dans laquelle
le refroidisseur (70) inclut une vanne d'arrêt (75) qui amène le refroidisseur (70) à commuter entre le fait de permettre au gaz de refroidissement de s'écouler à l'extérieur via une ouverture formée au niveau du cylindre (41) et le fait d'empêcher le gaz de refroidissement de s'écouler à l'extérieur.

4. Machine de moulage à injection (10) selon l'une quelconque des revendications 1 à 3, dans laquelle
le cylindre (41) inclut une entrée d'écoulement de gaz (64) et une sortie d'écoulement de gaz (65) du gaz de refroidissement ; et
au moins une de l'entrée d'écoulement de gaz (64) et de la sortie d'écoulement de gaz (65) correspond à un orifice d'alimentation en résine (62) destiné à fournir une matière de résine à la partie d'alimentation en résine (52Z1) de la vis (52).

5. Machine de moulage à injection (10) selon l'une quelconque des revendications 1 à 4, dans laquelle
le gaz de refroidissement inclut un gaz inerte.
